# EUROPEAN PATENT SPECIFICATION

(11) **EP 3 782 348 B1**
(45) Date of publication and mention of the grant of the patent: **03.04.2024**
(21) Application number: 19742942.6
(22) Date of filing: 21.06.2019
(51) Int. Cl.: H04L 9/40, A43B 3/36, A43B 3/38, A43B 13/00, A43C 19/00, H04W 12/33, G06F 3/14, H04W 12/06, A43B 3/00

(54) **METHOD OF CONTROLLING SHOE DISPLAYS**
VERFAHREN ZUR STEUERUNG VON SCHUHANZEIGEN
PROCÉDÉ DE COMMANDE D'ÉCRANS D'AFFICHAGES DE CHAUSSURE

(30) Priority: 25.06.2018 IT 201800006636
(43) Date of publication of application: 24.02.2021
(73) Proprietor: Geox S.p.A., 31044 Montebelluna (TV) (IT)
(72) Inventor: MORETTI POLEGATO, Mario, 31044 Montebelluna (TV) (IT); CHIOVARO, Sergio, 31044 Montebelluna (TV) (IT); MATTIONI, Bruno, 31044 Montebelluna (TV) (IT); RAMPIN, Michele, 31044 Montebelluna (TV) (IT); GALLO, Giuliano, 31044 Montebelluna (TV) (IT)
(74) Representative: Biesse S.r.l.
(86) International application number: PCT/IB2019/055256
(87) International publication number: WO 2020/003079

(56) References cited:
- CN-A- 106 332 384
- US-A1- 2007 260 421
- US-A1- 2014 282 877
- US-A1- 2015 061 891

## Description

### Field of the invention

The present invention concerns a method of controlling shoe displays, in particular a method for controlling remotely and wirelessly the operation and programming of one or more displays integrated in shoes.

### State of the art

Shoes and in general shoe items equipped with luminous displays integrated in the sole or in the upper, or even in both, are known.

In the most widespread solutions, the displays integrated in shoes are activated by the pressure applied to a switch by a user, or thanks to movement sensors that detect, for example, the stress transmitted to the sole from the moment the latter touches the ground and generate a corresponding pulse for turning on the display.

The displays integrated in shoes can emit one or more sequences of lights, also of different colors, and generally comprise one or more screens or light panels, of the LED (*Light-Emitting Diode*) type or of the OLED (*Organic Light-Emitting Diode*) type, which can display messages customized by the user, following a predetermined light pattern, for example like a fixed, scrolling, flashing message, etc. The displays generally comprise a LED/OLED matrix, i.e. a plurality of LED/OLED devices arranged in rows and columns; the selective turning on/off of the LEDs/OLEDs allows to display texts and/or figures, hereinafter simply defined as *content,* static or dynamic in motion.

The displays can use a battery of the disposable type as power source, or rechargeable, for example by means of a USB port housed in the shoe item, which also acts as a port for exchanging data, thus allowing to insert a message or shapes/logos to be displayed in a memory of the display.

For example, the patent application US 2009/0288317 discloses a shoe or clothing item comprising a programmable display for displaying the information selected by the user, according to predefined patterns. The shoe comprises a sole or a shoe upper, a power source of the display and a so-named *controller,* for example a microchip, which exerts control on the content displayed on the display and on the pattern with which the content is shown. Among the light patterns available there are, for example, the constant, intermittent/flashing, exploded, scrolling displays and combinations thereof. The content displayed can be text messages, symbols, images, logos and combinations thereof.

More in detail, US 2009/0288317 discloses a first embodiment wherein, in the programmable display, which is substantially rigid, the controller and power source, as well as control buttons and a so-named data port, for example USB, used to recharge the power source both to insert or exchange the information to be displayed, are incorporated. In this first embodiment, the programmable display is housed inside the shoe item, at the upper or at the sole.

A solution similar to the one just described consists of shoes for children produced by the Brazilian company Ortopé (www.ortope.com.br) under the trade name "Letra LED," shown in the following video on the Internet platform YouTube: https://youtu.be/5q05IFHewgQ. The programmable display of the Letra LED shoe can be programmed by means of buttons or a specific microchip controller present on the display, directly on the shoe.

Another Brazilian producer, the company Calçados Bibi Ltda (https://bibi.com) markets shoes for children named "Bibi disPlay" provided with a display programmable by means of a PC connected by wire, with a USB jack, as shown in the following YouTube video: https://youtu.be/5×5MF_J6YPM. Specific software installed on the PC reproduces the matrix (rows and columns) of the LEDs constituting the display of the shoe and allows the user to selectively turn on/off the single LEDs modeled as pixels, so that to obtain the desired texts and/or drawings. In other words, the content is first created on the screen of the PC, by means of the specific software that stimulates the LEDs themselves, and is then transmitted by wire to a memory of the display on the shoe and effectively shown.

The solutions just described do not allow parents to efficiently control the content shown on the displays of the shoes. In fact, the wired connections just described are based on the assumption that the user is also the owner of the shoe, and he is allowed maximum freedom to program the display, i.e. the freedom to select the content; however, the use of the programming buttons present directly on the display is neither limited to parents, nor to the effective owner of the shoe.

The Applicant provides that there will be more need to exert parental control on the content shown on the displays of the shoes of their children in the future.

The same problem also arises in those solutions which provide for remotely controlling the display by means of wireless connections.

For example, US 2009/0288317 discloses a second embodiment wherein the programmable display and the relative controller are not integrated within a same system, but are separate from one another, the controller being of the remote or wireless type, whereas the display of the OLED type is flexible and combined with the shoe on the outside by means of an adhesive, at the upper or sole. The connection between the controller and the display can be, for example, of the Bluetooth or infrared type (par. 37).

Although it is desirable to be able to remotely and wirelessly control the display on one hand, just to avoid the more inconvenient and fragile wire connections, it is desirable to avoid that the displays of children's shoes can be used inappropriately on the other, by the children themselves or by third parties, to show inappropriate content.

A further problem of the currently available solutions is linked to the consumption of electric power by the displays. The batteries used to power the displays are small, because the space available to them in the soles of the shoes is limited. Thus, the capacity of the batteries is also limited, and the continuous or frequent use of the display causes their rapid discharge. Instead, buyers expect the opposite, in the sense that they desire the maximum possible duration of the batteries.

US 2007/260421 discloses a shoe that can be equipped with an electronic module (reference 802 in the drawings) of the extractable type, which can in turn have a display on which the information relative to the athletic performance of the wearer is displayed. The electronic module can be interfaced in wireless mode with a remote system (reference 110, 314) and its operation is subordinated to a procedure of authentication. The communications between the electronic module and the remote system can be two-way and can be subordinated to password identification.

### Summary of the Invention

A first technical problem at the basis of the present invention is to provide a method to remotely and wirelessly control the displays of shoes that allows to establish an efficient control of the displays and content shown, possibly also selectively for each display.

A second technical problem is to allow to remotely and wirelessly control the displays of shoes efficiently and to simultaneously manage the consumption of the batteries powering the displays in the most efficient way possible.

In its first aspect, the present invention thus concerns a method according to claim 1, to remotely and wirelessly control one or more programmable luminous displays integrated in shoes.

In particular, the method comprises:
a) providing the display to be controlled with a wireless connection interface, for example Bluetooth, able to support one or more connections to corresponding controllers, simultaneously or at different times;
b) providing the display to be controlled with a memory;
c) providing a first controller, named *master* controller, for example a smartphone or tablet, with a wireless connection interface,
c') assigning a univocal identification code to the master controller;
d) connecting the master controller to the display to be controlled, by using the wireless connection.

Advantageously, when needing to implement parental control, the univocal identification code of the master controller is stored in the memory of that display, which becomes a display controlled by the master controller.

At this point, the method provides for:
e) assigning to the master controller privileges of administering the controlled display, and
f) making the control operable by additional controllers, named *slave controllers*, on the display subject to approval or limitations by the master controller.

The term *integrated,* referred to the luminous displays, is in fact used to denote that the displays are preferably made together with the relative shoe, i.e. form an integral part thereof; they are not components that can be extracted from the shoe, unless the shoe itself is destroyed.

The term controller is understood as any type of electronic device able to support wireless connections and to process and send the content to be shown to the displays. The controllers can be, for example, smartphones, tablets, notebooks, smartwatches, etc.

The expression univocal identification code is understood as a code of numbers and/or letters, i.e. alphanumerical.

The univocal identification code can be obtained in one of the following modes:
- it can be set manually be the user, and can thus be named "user code," or
- generated automatically by software, with an algorithm or in random mode, or
- it can be the MAC address of the connection interface of the master controller or the MAC address of the connection interface of the display, or also only a part of the MAC address, or
- a combination of at least two of the three preceding modes, i.e. it can be a code set by the preceding codes, or portions thereof, in combination.

The MAC (Media Access Control) address, also named physical address, Ethernet address or LAN address, is a code of 48 bits assigned univocally by the producer to each Ethernet or wireless network card and preferably cannot be modified.

Preferably, the univocal identification code comprises a portion of the code set by the user of the master controller, named *user code,* or generated in casual mode (random) by the same master controller. In other words, the univocal identification code preferably comprises the user code set by the user or generated randomly by the master controller, and a code that cannot be modified, like the MAC address or a part thereof. This way, the univocal identification code is formed by two portions, of which one cannot be modified. More preferably, the univocal identification code is formed by the user code and MAC address, or a portion thereof, of the connection interface of the display.

The method just described allows to easily implement the parental control of the displays, i.e. the control on the content shown on the displays, by defining a hierarchy between the controller devices enabled to send the content to the displays. By having stored the identification code generated by the master controller in the display memory, the control of the display can be subjected to the settings of the master controller, and the slave controllers cannot modify such settings without the approval or supervision of the master controller. For example, the master controller can enable a slave controller by sharing the univocal code therewith and by enabling the relative user code on the display.

Moreover, the user code allows to set filters relative to the operation of the display, for example allows to lock/unlock the content to be displayed on the display.

The settings can concern both the content itself and the relative display patterns.

This allows to prevent or limit the improper use of the displays by the younger wearers of the shoes, and in particular allows to filter the content, by preventing inappropriate ones from being shown on the displays, for example at a time of day when the boys or children are in school and not under the direct control of their parents.

By having set a master controller, for example the smartphone of one of the parents of the wearer of a pair of shoes provided with programmable luminous displays, it is possible to limit the use of the displays, through the master controller, to the content previously approved through the master controller: the user of the shoes can limit himself to displaying the approved content, for example by selecting a sentence among those approved and stored in a specific library of the display.

In the preferred solution, the display recognizes the corresponding master controller by means of the univocal identification code, for example formed by the user code and the MAC address of the Bluetooth interface of the display, or part thereof.

Preferably, the master controller is a mobile device selected among a smartphone, a tablet, a smartwatch, a notebook, a voice assistant. Preferably, the control of a display comprises one or more among the following activities: controlling the content shown on the display, controlling the displaying effects of the content, for example the duration, the movement of the content on the display and the brightness of the display, controlling a library of authorized content, controlling the download of content via Internet connections shared with the master controller or with a slave controller, controlling the state of charge of a battery powering the display, controlling the connections with one or more slave controllers. The term *controlling* is to be understood as the possibility of activating/deactivating or adjusting the display, or setting filters, for example for *parental control.*

The method according to the present invention further comprises:
g) changing the operating mode of the display from public to private mode, or vice versa, by entering a user code on the master controller, wherein these expressions are understood as
- in private mode, only the master controller is authorized to change the programming of the display, in terms of the content shown and/or display light patterns;
- in the public mode, the slave controllers are also authorized to change the programming of the display.

This way, it is thus possible to allow the slave controllers to interface with the displays and to control their operation, i.e. to establish which content to show and with which light patterns and, whenever necessary, to inhibit this possibility. This function is useful in circumscribing and limiting the use of the slave controllers, such as for example the mobile devices used by the boys wearing the shoes.

For example, the switching from the public mode to the private one can be made by entering the user code on the master controller. In alternative, the switching from the public mode to the private one can be made by enabling/disabling the function through software (app) installed on the master controller, by letting the software generate a user code and saving it in the memory of the master controller.

Preferably, the same slave controllers authorized in the public mode are priorly and selectively authorized by the master controller, i.e. the master controller selectively enables and disables the slave controllers which can only interface with the displays for which they were authorized, to change their settings.

Preferably, in order to enable a slave controller to control a display data, the master controller transfers, by means of the aforesaid software, the univocal identification code to the slave controllers, together with the limitations set by the administrator through the master controller. This way, the slave controllers are also able to recognize the display of the shoe they were authorized to control.

The display that stored the univocal identification code allows users who requested it to control its operation when it detects the code in the master controller or in the slave controllers enabled.

Preferably, the method further comprises:
h) storing one or more content, each comprising letters and/or numbers and/or symbols and/or drawings, in a specific library in turn stored in a memory of the master controller and/or in the memory of the display, and/or in a memory of the slave controllers, after having priorly obtained the approval of the user of the master controller, and
i) inhibiting the possibility for the display to show content other than that stored during step h).

In practice, this function consists in creating a library of content approved by the master controller: only the content present in this library can be shown on the displays, whether it is selected directly by the user by acting on the display, for example through buttons, or whether the user proceeds to program the display with a slave controller.

Preferably (step i') the method further provides the possibility of enabling or disabling, for example by inserting a lock/unlock code such as the user code, or the speech recognition or the digital fingerprint recognition, an editing mode of the content stored in the library during step h'). This allows to manage the library of the authorized content according to one's expectations.

In an embodiment, the method further provides that:
l) at least one between the master controller and the slave controller shares its own Internet connection, for example the data connection of a telephone provider, with the display, and
m) the display shows, automatically or by manual control, content downloaded from the Internet.

This function allows to exploit the Internet connection of the controllers to access remote content, for example content specifically arranged for the displays by the producers of the shoes, uploaded on a website to which the controllers can register. Also, this mode allows to implement the parental control, given that the registration of the controllers can be subordinated to the same hierarchy initially established between the master controllers and slave controllers. Thus, preferably, the content shown on the display during the step m) are priorly authorized by the master controller.

Preferably, the master controller manages with administrator privileges more than one display, one by one or simultaneously. For example, the master controller manages the displays of more shoes, and each slave controller controls one or more displays, selectively depending on the authorizations set on the master controller. Thanks to this function, the controllers can control the displays of several pairs of shoes simultaneously; a function useful for those who also wish to simultaneously program the displays of a plurality of shoes collected, for example, in a shoe closet.

Given the possibility to interact with Internet sites, the method preferably further comprises:
n) exercising administrator privileges directly via wireless or wired connections between the master controller, the slave controllers and the displays, or indirectly via a processor of the displays, and/or
o) exercising administrator privileges via a website with which the master controller, the slave controllers and the displays can be connected, i.e. interfaced, or on which they are registered.

In other words, the settings selected on the master controller can be made valid directly on the slave controllers and on the display, when these elements are connected wirelessly or by means of cables, or indirectly, via the website from which the content is downloaded; in this circumstance, the filters for the parental control are set directly on the website and cannot be bypassed by the displays or slave controllers.

Preferably, the method according to the present invention further comprises:
p) remotely setting an emergency/warning mode corresponding to the displays on and fully lit in a continuous or intermittent manner, to allow the wearer to be more simply identified. This function can be useful in circumstances in which a parent wishes to identify a child wearing the shoes in the dark or in a crowd. It is a function that can also be useful when walking along the edge of a road in low lighting conditions.

Preferably, the method provides to store on the display, and/or on the master controller and/or on the slave controllers, the chronology of the content displayed on the display.

A second aspect of the present invention, for which the Applicant reserves the right to file a divisional patent application, concerns a method according to claim 13 of controlling one or more displays integrated in shoes and of managing the batteries powering the displays.

In particular, the second aspect of the present invention concerns a method of controlling at least one programmable luminous display of a shoe, powered by a battery and equipped with a connection interface connecting to an external controller, comprising:
q) detecting the state of charge of the battery and automatically selecting one of the following feedback modes, based on the detected state of charge:
r1) transmitting to the display, by a controller, the content to be displayed aggregated in a single data packet, by using the connection interface only for the time needed to transmit the single data packet;
r2) transmitting to the display, by a controller, the content to be displayed divided into a plurality of data packets, by using the connection interface for the time needed to transmit all data packets or intermittently;
r3) transmitting to the display, by a controller, the content to be displayed, in real time as the content is created on the controller itself, while keeping the connection interface always active.

The three modes r1-r3 are presented in ascending order with respect to the consumption of the battery of the display, i.e. the r1 mode is the one with the lowest battery consumption because the connection interface is only used for the time needed to transmit a complete data packet, and the r3 mode is the one with the highest battery consumption because it provides to keep the connection interface always active for an exchange of data in real time between the controller and the display.

The method just described allows to optimize the consumption of the battery by the displays, because an automatic procedure is activated to transmit towards the displays: if during the step q) a value of the charge of the battery is detected below for example 30%, the display and/or the controller will be automatically set to prevent the transmission modes r2 and r3, allowing the transmission according to the r1 mode instead. If the state of charge of the battery is above a threshold value set by the manufacturer or the user, the display and/or the controller will be automatically set to allow some or all the transmission modes r1-r3.

This allows to achieve the maximum duration of the battery and thus a more pleasant display use experience for users.

Optionally, the preceding steps from q) to r3) are subordinated to the implementation of the method according to a first aspect of the present invention, i.e. the method intended to optimize the consumption of the battery can be subordinated to the method for parental control.

The case of a pair of shoes, right and left, provided with displays of different sizes will now be taken into consideration: for example, the display of the right shoe is constituted by a LED matrix 36x5 and the display of the left show is constituted by a LED matrix 30x3. In this circumstance, preferably the step q) is implemented only on the battery of the shoe with the larger display, which in the example described is the display of the right shoe. This function corresponds to checking the state of charge of the battery only on the display with greater consumptions: it is a conservative condition given that the automatic setting of one of the modes r1-r3, based on detecting the most stressed battery, is certainly also effective also for the less stressed battery.

Preferably, the method further comprises:
t) providing the displays with a sensor for the light intensity in the environment in which the displays are located, and
u) automatically feedback adjusting the brightness of the displays based on the ambient light intensity detected by the corresponding sensors, by possibly switching off the displays in the event that the detected ambient light intensity is greater than a threshold value.

This function allows to minimize the consumption of the batteries when the LEDs of the displays are anyhow barely visible or not visible, for example outdoors in conditions of intense sunlight.

Preferably, the method further comprises:
v) automatically feedback modifying, by means of a controller or directly by a processor of the displays, the content display light pattern, based on the state of charge detected in step q), by selecting a display light pattern that causes the battery to be used less, each time the state of charge of the battery drops below a corresponding threshold level.

Preferably, the method further comprises:
x) turning off the display if the state of charge of the battery is equal to or less than a threshold value, and preserving the remaining battery charge for the implementation of the emergency/warning step p) described above.

Taking care to store a plurality of display light patterns, each characterized by a corresponding consumption of the battery, the duration of the battery can be maximized between two recharging cycles.

From a practical point of view, the displays mounted on the right and left shoes of a same pair of shoes are generally mounted at 180° apart from each other, i.e. they are specular. This circumstance creates an inconvenient in the management of the content: without an adequate processing of the content, it would indeed be displayed with different orientations on the two displays, straight on a display and inverted on the other display.

Therefore, the method preferably comprises:
z) in a pair of shoes each having a display, in which the displays are arranged at 180° apart from each other, the controller processes the content before transmitting it to the displays, also obtaining the specular and/or inverted version of the content, in order to obtain on both displays the same orientation of the content. Similarly, the processing can be carried out directly by the processor of the display.

It is specified that the first method described, object of claims 1-10, can be subordinated to the second method, object of claims 11-15, and vice versa, i.e. both methods can be implemented independently or together.

### Brief description of the figures

Further characteristics and advantages of the invention will become clearer in the following detailed description of some preferred, but not exclusive, embodiments illustrated by way of example and without limitations, with the support of the accompanying figures, in which:
- figure 1 schematically shows a perspective view of a shoe provided with a display controlled remotely and wirelessly according to the method of the present invention;
- figure 2 schematically shows a perspective upper view of the shoe of figure 1;
- figure 3 shows a perspective view of the electronic light system of the shoe structure of figure 1, separated from the aforesaid shoe;
- figure 4 shows a first flow diagram relative to the method according to the present invention;
- figure 5 is a schematic figure of a first application of the method according to the present invention;
- figure 6 is a schematic figure of a second application of the method according to the present invention;
- figure 7 is a schematic figure of a third application of the method according to the present invention;
- figure 8 is a block diagram relative to a method according to the present invention;
- figure 9 is a schematic figure of a preferential function of the method referred to in figure 8.

### Detailed description of the invention

With reference to the accompanying figures, number 1 generally denotes a shoe provided with a display 8 controlled according to the present invention.

The shoe 1 comprises an upper 2 and a sole 3 constrained to each other, and an electronic light system integrated in the shoe and generally denoted by 4, and of which the display 8 is a part. The electronic light system 4 can be controlled remotely by a controller 5, 5' separated from the shoe 1, for example a smartphone, tablet or smartwatch.

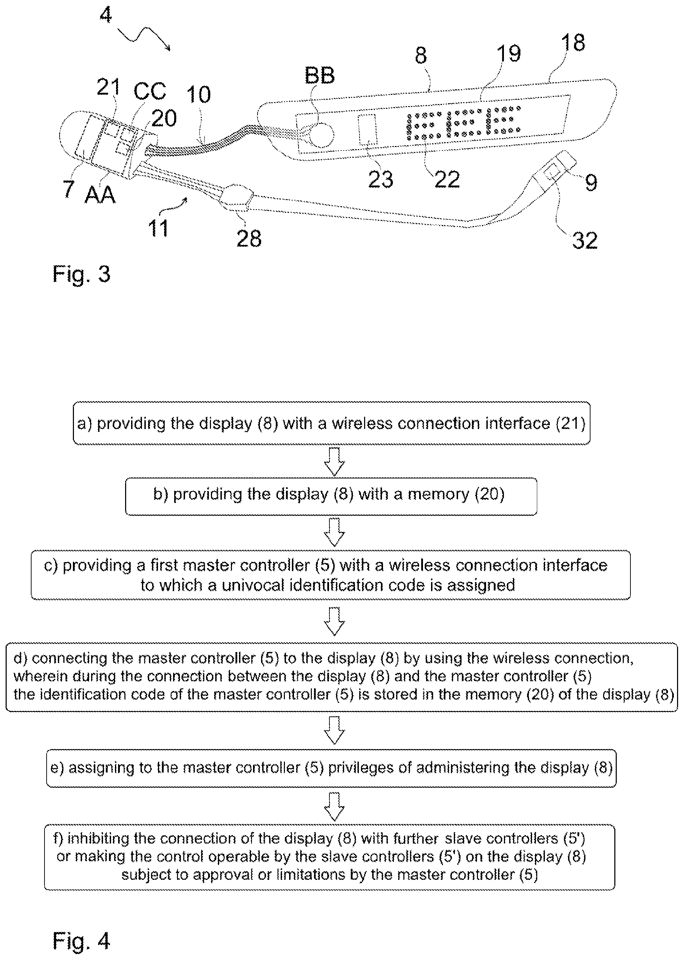

Both the integrated light system 4 and the controller 5, 5' are provided with a wireless connection interface, preferably of the Bluetooth type, that allows the connection between these elements 4-5', preferably in a two-way manner, i.e. allowing the exchange of data from the controller 5, 5' to the integrated light system 4 and vice versa. In figure 3, the wireless connection interface of the integrated light system 4 is denoted by the reference 21 and will henceforth be denoted like the connection interface of the electronic light system 4 for simplicity.

Preferably, the connection interface 21 is of the low consumption *Bluetooth* type (BLE). For example, a preferred Bluetooth module comprises a radio chip, a micro-controller, a signal amplifier and an antenna.

The electronic light system 4 comprises a power source 7, for example a rechargeable battery electrically connected to a main electronic circuit AA, a programmable luminous display 8, a connecting port 9, first connecting means 10 extended between the programmable display 8 and the main electronic circuit AA, and second connecting means 11 extended between the main electronic circuit AA and the connecting port 9. The connecting port 9, for example of the USB type, allows the connection of a battery charger, to recharge the battery 7, and possibly allows the exchange of data with a controller 5, 5' in alternative to the wireless mode.

The programmable luminous display 8 is of the LED or OLED or QLED type, generally denoted by LED, and comprises a matrix (rows and columns) of LEDs 22 which can be selectively turned on and off to define texts, logos, drawings.

In practice, the programmable luminous display 8 is a substantially flat printed circuit 19 equipped with a plurality of LEDs 22, for example arranged in a matrix 36x5 or 30x3 (columns × rows), facing the same direction and housed in the casing 18, a pocket protecting the display 8 on the shoe 1 without screening the light produced by the LEDs 22. Preferably, the casing 18 is made of a semitransparent plastic material, advantageously of a flexible material, for example thermoplastic polyurethane (TPU) or polyvinyl chloride (PVC).

In the example shown in figure 3, the LEDs 22 show the words "EEE".

A digital processor to process signals from digital to analogical BB of the known type, which allows to reduce the amount of electric cables needed in the first connecting means 10 to the minimum, is positioned on the printed circuit 19.

A CPU CC of known type, preferably a microprocessor, a wireless connection interface 21 and a memory 20 with the relative firmware are housed in the main electronic circuit AA. The first connecting means 10 are welded to the main electronic circuit AA. Information, such as data, codes, etc. can be stored in the memory 20.

Preferably, the printed circuit 19 is flexible, and during the assembly step of the shoe 1, the display 8 is curved to match the curvature of the sole 3. In alternative, the printed circuit 19 is rigid and the assembly on the shoe 1 is provided at an area not subject to stresses which can cause the bending of the printed circuit 19 itself.

Preferably, the battery 7 is housed in the sole of the shoe 1 and the first connecting means 10 comprise first electric cables and possibly an electric connector. As far as the second connecting means 11 are concerned, it should be said that they comprise second electric cables and possibly an electric connector.

In particular, second connecting means 11 also comprising, in addition to the aforesaid second cables, an electric connector 28 interposed between the main electric circuit AA and the connecting port 9 are shown in the example of the figures, the possibility to provide cables devoid of interruptions for a continuous and direct connection between the power source and the connecting port not however being excluded, this embodiment variant not being shown in the figures.

In any case, as far as the connecting port 9 is concerned, it should be added that it is preferably arranged away from the sole 4, in order to limit both the risk of accidental blows or excessive mechanical stresses due to the use of the shoe 1 and to limit the risk of being damaged by water and by environmental impurities, which can more easily find themselves at the level of the sole 3, i.e. for example at the ground level.

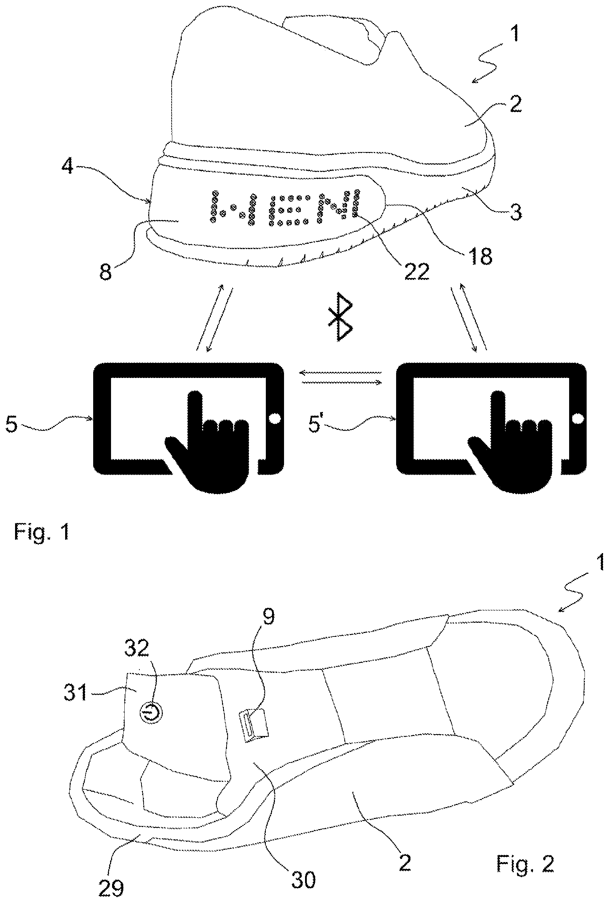

With regard to this, as shown in figure 2, the upper 2 comprises a collar 29 and a tongue 30, and the connecting port 9 is arranged at the collar or, as shown in the examples of the figures, at the tongue 30. Preferably, the tongue 30 comprises a mobile and foldable portion 31, which covers and protects the connecting port 9 when there is no need to access it and which can be moved by uncovering the connecting port 9 when it must be accessed.

The second connecting means 11 extended between the power source 7 and the connecting port 9 are advantageously integrated in the shoe 1, and are particularly placed between the upper and a lining inside the shoe combined with the upper, not shown in the examples of the figures. This way, the exposure of the second connecting means 11 to the sweat produced by the foot of a user inside the shoe 1 is limited, and moreover the second connecting means 11 are sheltered from a possible unwanted friction caused by contact with the foot and which could cause them to break.

If necessary, the second connecting means can also extend for a limited length along the sole, particularly between the housing seat for the power source and a perimeter edge inside the sole itself.

Preferably, the shoe comprises a control button 32 active on the electronic light system 4, and/or a movement sensor, the latter of the known type and not shown in the examples of the figures. The control button 32 is advantageously housed at the mobile and foldable portion 31 of the tongue 30, and can advantageously be used to select the light pattern to display, naturally as well as to turn on and off the electronic light system 4.

Figure 4 is a flow diagram that explains how the method according to the present invention is implemented. The electronic light system 4 must be equipped with a wireless connection interface 21 (step a). In the examples described above, it is obtained by mounting the interface 21 on board of the integrated light system 4 which integrates the main electronic circuit AA. Thus, the interface 21 can be considered as the wireless interface of the display 8, which allows to activate connections with outer, remote devices.

The electronic light system 4 is also equipped with a CPU CC processor and a memory 20 (step b) which acts as a memory in which the identification code referred to in the successive steps c) and d) must be stored.

For simplicity, the term display 8 will henceforth be used to denote the main electronic system 4 as a whole.

In turn, an external controller 5, i.e. one of the remote devices with which to start a connection to control the programming of the display 8, must be equipped with a wireless connection interface to which a univocal identification code (step c) is assigned. This can be obtained, for example, by:
n1) setting the code manually (insertion by the user), or
n2) automatically generating the code (by the controller) through a software, algorithm or in random mode, or
n3) using the MAC address of the connection interface of the master controller 5 or the MAC address of the connection interface 21 of the display 8, or also only a part of the MAC address, or
n4) combining two or more of the preceding codes n1-n3, or portions thereof.

Preferably, however, the univocal identification code is obtained by using the MAC address of the Bluetooth interface of the display 8. In alternative, it is possible to assign a code to the controller 5 through a specific program, such as an "app" that can be installed on the controller 5. A code adapted for the purpose can be formed by the MAC address of the interface of the display 8, or by a part thereof, not changeable, and by a user code generated randomly by the controller 5 or inserted by the user of the controller 5, for example a numerical code of five digits.

Thanks to the wireless interface, it is possible to connect the controller 5 to the display 8 to carry out a programming, i.e. to send content to show, or to change or set light patterns for displaying content (step d).

Advantageously, when connecting between the display 8 and the controller 5, the identification code of the controller 5 is stored in the memory 20 of the display 8.

This allows to assign to the controller 5 privileges of administering the display 8 (step e); for this reason, the controller 5 is named master controller and any other controllers 5' that attempt to establish a connection with the display 8 are configured as slave controllers 5', i.e. controllers subordinated to the master controller 5.

By having established which master controller 5 is equipped with administrator privileges, it is possible to subordinate the control on the display 8 that can be exerted by the slave controllers 5' to the approval or limitations by the master controller 5 (step f). For example, this can occur by communicating the univocal code from the master controller 5 to the slave controllers 5', which can thus recognize the display 8 to be controlled.

At this point, it is possible to implement the parental control on the content and display light patterns of the display 8.

In general, the control of a display 8 comprises one or more of: controlling the content shown on the display 8, controlling the displaying effects of the content, for example the duration, the movement of the content on the display 8 and the brightness of the display 8, the color of the content, the light fading, etc., controlling a library of authorized content, controlling the download of content via Internet connections shared with the master controller 5 or with a slave controller 5', controlling a battery 7 powering the display 8, controlling the wireless or wired connections with one or more slave controllers 5', where the term controlling is to be understood as the possibility of activating/deactivating or adjusting the display 8, or setting filters, for example for parental control.

A first form of parental control provides, by the master controller 5, to change the operating mode of the display 8 from public to private mode, or vice versa (step g). Only the master controller 5 is authorized to change the programming of the display 8 in the private mode. This means that the connection requests of the slave controllers 5' are rejected by the interface 21, or the slave controllers 5' can connect to the display 8 but cannot change the programming, i.e. cannot change the content, but at most change the content display light patterns or carry out a diagnostic analysis, for example control the state of charge of the battery 7. Instead, in the public mode, also the slave controllers 5' are authorized to change the programming of the display 8, by modifying the content to display.

For example, the switching from the public mode to the private one can be obtained by subordinating the change at the insertion of the user code on the controller 5 or 5' or on the display 8 (via buttons).

Preferably, the slave controllers 5' authorized in the public mode are priorly and selectively authorized by the master controller 5, for example by making it so that the user code is released by the master controller 5 to the slave controllers 5' enabled. For example, a parent can, by entering his user code on his smartphone, authorize the smartphones of his children so that they can interface with the display 8, or can deny the authorization and keep the possibility to program the display for himself.

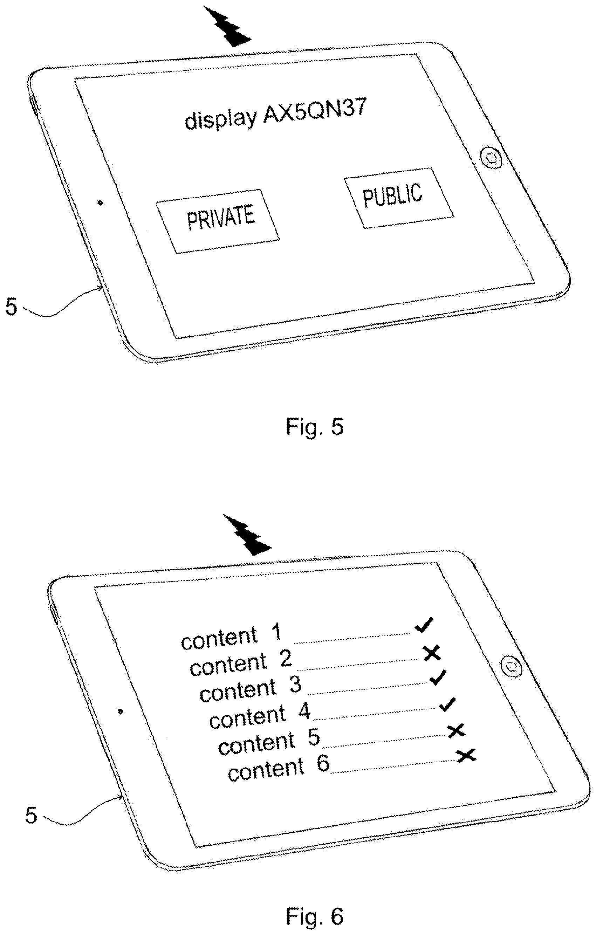

For example, figure 5 shows a practical application: software that allows to control one or more displays 8 is installed on a tablet 5 acting as a master controller. The screen relative to a particular display identified with the code AX5QN37 is shown in the figure. It is possible to assign a name or different alphanumerical code instead of the code. The user of the tablet 5 can change the settings on the display through two specific "private" and "public" buttons, as described above.

Figure 6 refers to the preferential steps:
h) storing one or more content (content 1 - content 6), each comprising letters and/or numbers and/or symbols and/or drawings, in the memory 20 of the display 8 and/or in a memory of the slave controller 5', after first having priorly obtained the approval from the control master 5, for example with a checklist as shown in the figure, and
i) inhibiting the possibility that content other than that stored during the step h) can be shown on the display 8, with a software lock directly active on the display 8, i.e. on the CC processor.

Preferably (step i') the method also provides to enable or disable, for example by inserting a lock/unlock code such as the user code, or through speech recognition or digital fingerprint recognition, an editing mode to edit the content stored in the library.

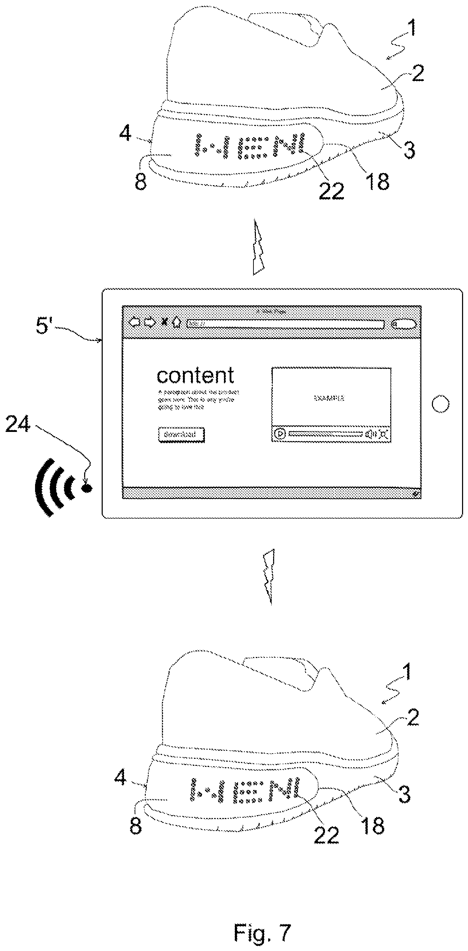

Figure 7 refers to other optional functions of the method which provide that one between the master controller 5 and a slave controller 5' shares its own Internet connection 24, for example a wi-fi connection (step l), with the display 8. This way, the content downloaded or made accessible from Internet (step m) can be shown automatically or by manual control on the display 8. The example in figure 7 shows a tablet 5', i.e. a slave controller priorly authorized by the control master 5, which through its wi-fi connection accesses a website from which it downloads content that is transmitted to the display 8 to be shown. The download of the content and the transmission to the display 8 can be manual, i.e. subordinated to a manual control by the user, or automatic, after a specific selection and approval.

In order to implement an effective parental control of the content, also the content shown on the display 8 during step m) is priorly authorized by the master controller 5.

Still with reference to figure 7, the master controller 5 manages with administrator privileges more than one display 8, one by one or simultaneously. Each slave controller 5' controls one or more displays 8, for example the displays on two shoes like in the figure, selectively based on the authorizations set on the master controller 5.

In general, the master controller 5 is a mobile device selected among a smartphone, a tablet, a smartwatch, a notebook, a voice assistant such as Google Home^{®}.

Then, in general, the administrator privileges can be exerted directly by the master controller 5 through a wireless or wired connection between the master controller 5, the slave controllers 5' and the displays 8, or indirectly by exploiting the CC processor of the displays 8 (step n), for example by setting filters on the CC processor.

In alternative or in addition, the administrator privileges can be exerted indirectly via a website, for example an Internet platform provided by the producer of the shoes 1, on which the master controller 5, the slave controllers 5' and the displays 8 can be registered or with which they can interface (step o).

The method according to the present invention also provides the possibility of remotely setting an emergency/warning mode (step p), which corresponds to the displays 8 on and fully lit, i.e. with all the LEDs 22 turned on in a continuous or intermittent manner, to allow the wearer to be more simply identified in the dark, in the middle of a crowd or outdoors in the distance.

Preferably, the chronology of the content displayed on the display 8 is stored, for example on one or more controllers 5, 5' and/or directly in the memory 20 of the display 8 to allow a check a posteriori, i.e. parental control deferred over time.

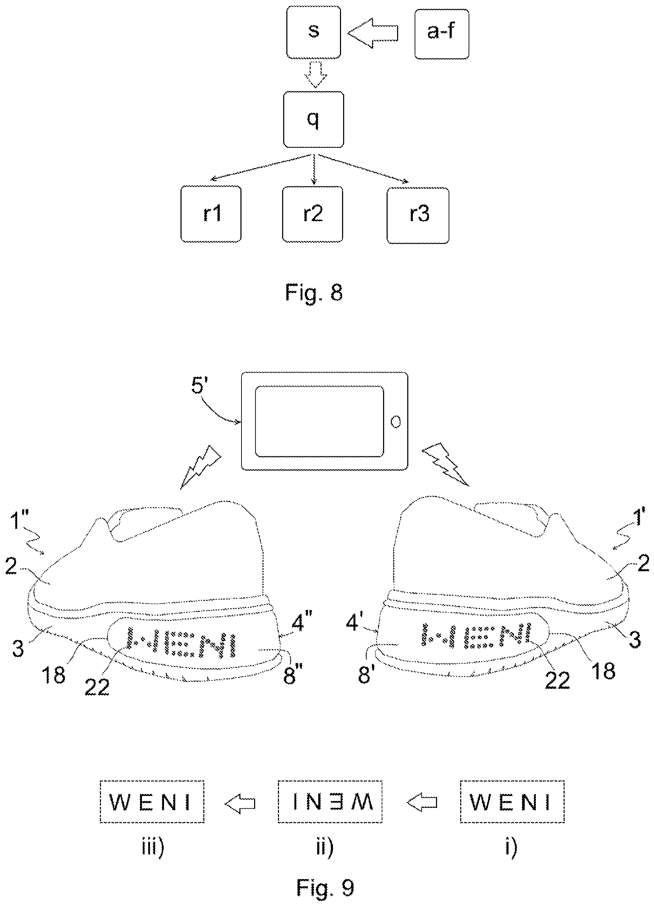

A second aspect of the present invention concerns the method schematized in the flow diagram of figure 8. The method has the purpose to implement the control of at least one programmable luminous display 8 of a shoe 1, in which the display 8 is powered by a battery 7 and is equipped with a connection interface 21 connecting to an external controller 5, 5' such as in the examples described above.

Initially, the step q), which provides to detect the state of charge of the battery 7, is implemented. This can be obtained, for example, by providing a printed circuit 19 of a specific electronic circuit such as those present on smartphones: an example is constituted by an operational amplifier used as a voltage comparator, which depending on the voltage detected at the ends of the battery 7, determines the state of charge.

The circuit used preferably detects the state of charge of the battery between the values 0% and 100% with a sensibility equal to 1%-5%. In feedback, based on the state of charge of the battery 7, the method provides to automatically select one of the following modes for transmitting the data from a controller 5, 5' to the display 8:
r1) transmitting to the display 8, by a controller 5, 5', the content to be displayed aggregated in a single data packet, by using the connection interface 21 only for the time needed to transmit the single data packet. It is the mode which involves less energy consumptions: the processing of the content and data is carried out before the relative transmission and, thus, the connection interface 21 does not absorb energy during the processing, but only during the effective transmission of the data already aggregated in a single packet;
r2) transmitting to the display 8, by a controller 5, 5', the content to be displayed divided into a plurality of data packets, by using the connection interface 21 for the time needed to transmit all data packets or intermittently. In this circumstance, the processing of the data is not concluded before sending the first data packet, but the controller 5, 5' aggregates a certain amount of data until a first packet is formed, proceeding with the sending and continuing to aggregate data in other packets, sending them from time to time. For example, as the user composes a text on the controller 5, 5' to be displayed on the display 8, it is not waited for the text to be concluded and approved before sending, but the sending of one word at a time to the display 8 as the words are inserted in the controller 5, 5' by the user proceeds. This solution involves more energy consumption with respect to the mode described in r1 and less with respect to the mode r3;
r3) transmitting to the display 8, by a controller 5, 5', the content to be displayed, in real time as the content is created on the controller 5, 5' itself, while keeping the connection interface 21 always active. This is the mode that involves the most energy consumption, because the interface 21 is always active and demands energy from the battery 7 for the entire time.

Optionally, the step q) and the modes r1-r3 are subordinated by the implementation of the method described with reference to the first aspect of the present invention. In other words, the method that allows to optimize the consumptions of the battery 7 can be subordinated to the method that provides to implement the parental control in all the forms described (step s in figure 8).

Whenever the displays 8 to be controlled are two (or more), having different sizes, for example a display 8 with 36x5 LEDs 22 on the right shoe and a display 8 with 30x3 LEDs 22 on the left shoe, the consumption of the respective batteries 7 will be different for the two displays 8, for the same time of use. In this circumstance, the step q) is only implemented on the battery 7 of the larger display 8 of the two displays 8, i.e. the display of the right shoe in the example mentioned. In fact, it is the most restrictive condition.

Preferably, as shown in figure 3, the displays 8 are combined with a sensor 23 for the light intensity in the environment in which the displays 8 are located (step t). This allows to:
u) automatically feedback adjust the brightness of the displays 8 based on the ambient light intensity detected by the corresponding sensors 23.

In other words, the intensity of the light emitted by the LEDs 22 is adjustable and can be increased or decreased according to the necessity, to avoid useless wastes of energy. For example, the displays 8 can be turned off if the ambient light intensity detected is above a threshold value, such as can happen outdoors during a sunny summer day, when the LEDs 22 would anyhow be barely visible.

Preferably, the method provides the possibility of adaptively feedback changing the content display light patterns on the displays 8 based on the state of charge of the battery 7 (step v). This means that one between the controller 5, 5' or directly the CC processor of the display 8 selects the display light pattern that causes less consumption of the battery 7 each time the state of charge of the battery 7 falls below a corresponding threshold level.

For example, this is a practical application: the manufacturer of the shoes 1 uploads in the memory 20 of the display 8 a certain number of display light patterns of which he knows the corresponding energy consumptions; once the charge of the battery 7 decreases of a gradient equal to 10-20%, the CC processor automatically sets a new display light pattern among the ones preloaded, which involves less consumptions.

Figure 9 is a schematic figure relative to a concrete example: a pair of shoes both provided with a display. The right shoe 1' is provided with the integrated display 8' and the left shoe 1" is provided with the integrated display 8". The content is sent by a controller 5 or 5' to both displays 8', 8". Physically, the two electronic light systems 4' and 4" are identical, although positioned at 180° apart from each other. This involves that, without an appropriate processing of the content by the controller 5 or 5' or by the CC processor, the content would be shown straight on one shoe, for example the right 1' one, and inverted on the other, the left 1" one.

In practice, the content initially transmitted with the correct orientation (i) to the right shoe 1', would be shown as reported in ii). The method thus provides to process the content before transmitting it to the displays 8" or directly by the CC processor of the display 8", thereby also obtaining the specular and/or inverted version of the content, as reported in iii), in order to obtain the correct visualization, i.e. the same orientation on both displays 8', 8".

Preferably, if it is detected that the battery 7 has reached a critical charge value, i.e. a predetermined threshold, the method provides to automatically turn off the display to preserve the remaining charge of the battery 7 and to reserve it to the emergency/warning mode described above (step p), corresponding to the displays 8 on and fully lit, i.e. with all the LEDs 22 turned on in a continuous or intermittent manner, to allow the wearer to be more simply identified in the dark, in the crowd or outdoors in the distance.

Some practical examples relative to software that can be installed on the controllers 5, 5' for implementing the parental control will now be described.

### EXAMPLE 1

Dialog scheme between smartphone 5 and display 8 and method of activating/deactivating the private mode:
- a smartphone 5 on which the software (app) was installed attempts a connection with the display 8, i.e. with its interface 21;
- the smartphone 5 connects to the display 8 and reads the MAC address of the display 8;
- the display 8 becomes invisible to other smartphones 5' until the connection is present;
- the smartphone 5 can have stored the univocal code consisting of a user code and of the MAC address of the display 8 to it associated (or part thereof), which is saved during the activation process of the private mode explained here below;
- the display 8 can have stored a user code saved during the activation process of the private mode explained here below;
- the smartphone 5 sends a signal to the display 8 of the type «user code presence request»;
- the display 8 sends a reply signal to the smartphone 5 of the type <<user code presence reply = TRUE/FALSE>>;
   **+ If <<user code presence reply = FALSE>>:**
      The display 8 enables the interaction between the smartphone 5 (the software) and the display 8;
      The software allows the user to customize the display 8;
   **+ If the user activates the private mode via the software:**
      The software generates a random user code (*user code generated*) and couples it with the MAC address code (or at least a part thereof) of the display 8, thus generating the univocal code;
      The software stores the univocal code in the local memory of the smartphone 5;
      The smartphone 5 sends a signal to the display 8 of the type <<user code change = *user code generated*>>;
      The display 8 stores the user code in its own local memory;
      The smartphone acquires the administrator privileges (via the software);

   **+ If <<user code presence reply = TRUE>>:**
      **+ If the smartphone 5 already has a univocal code in its own local memory (*user code stored*):**
         **+ If the univocal code contains the MAC address (or part thereof) of the display 8 connected to the smartphone 5:**
            Lo smartphone 5 sends a signal to the display 8 of the type <<user code correctness check = *user code stored*>>;
            **+ If the user code received by the display 8 corresponds to the user code saved in the local memory of the display 8:**
               The display 8 enables the interaction between the smartphone 5 (the software) and the display 8;
               The display 8 sends a signal to the smartphone 5 of the type <<user code correctness reply = TRUE>>;
               The software allows the user to customize the display 8;
                  **+ If the user deactivates the private mode via the software:**
                     The software deletes the univocal code from the local memory of the smartphone 5;
                     The smartphone 5 sends a signal to the display 8 of the type <<user code change = delete>>;
                     The display 8 deletes the user code from its own local memory;
                     The smartphone 5 loses the administrator privileges (via the software) and a second smartphone 5 or 5' can connect and in turn become the (sole) administrator;
            **+ If the user code received by the display 8 does not correspond to the user code saved in the local memory of the display 8:**
               The display 8 does not enable the interaction between the smartphone 5 (the software) and the display 8;
               The display 8 sends a signal to the smartphone 5 of the type <<user code correctness reply = FALSE>>;
               The message displayed to the user in the software is *"The user is not enabled";*
               The software does not allow the user to customize the display 8. In this case, any signal sent from the smartphone 5 is not accepted by the display 8. In alternative, the smartphone 5 is not enabled to send any signal to the display 8;
         **+ If the univocal code does not contain the MAC address (or part thereof) of the display 8 connected to the smartphone 5:**
            The display 8 does not enable the interaction between the smartphone 5 (the software) and the display 8;
            The message displayed to the user in the software is "*The user is not enabled*";
            The software does not allow the user to customize the display 8. In this case, any signal sent from the smartphone 5 is not accepted by the display 8. In alternative, the smartphone 5 is not enabled to send any signal to the display 8;
   **+ If the smartphone 5 does not have a univocal code in its own local memory:**
      The display 8 does not enable the interaction between the smartphone 5 (the software) and the display 8;
      The message displayed to the user in the software is "*The user is not enabled*",
      The software does not allow the user to customize the display 8. In this case, any signal sent from the smartphone 5 is not accepted by the display 8. In alternative, the smartphone 5 is not enabled to send any signal to the display 8;
- it is possible to delete the user code stored on the display 8 with a RESET procedure on the device, for example with a specific combination of buttons or instructions;
- after the reset, a second smartphone 5 or 5' can connect and in turn become the (sole) administrator;
- the user code can be random or generated by an algorithm (for example, it takes the 1st, 2nd, 3rd, 6th and 7th hexadecimal number of the MAC address of the Bluetooth interface of the display);
- advantageously, if the display 8 does not enable the interaction between the smartphone 5 (the software) and the display 8, the software or the display 8 force the disconnection between the smartphone 5 and the display 8, so that the display 8 can be visible to other smartphones 5'.

### EXAMPLE 2

Dialog scheme between smartphone 5 and display 8 and method of activating/deactivating the private mode:
- a smartphone 5 on which the software (app) was installed attempts a connection with the display 8, i.e. with its interface 21;
- the smartphone 5 connects to the display 8 and reads the MAC address of the display 8;
- the display 8 becomes invisible to other smartphones 5' until the connection is present;
- the smartphone 5 can have stored the univocal code consisting of a user code and of the MAC address of the display 8 to it associated (or part thereof), which is saved during the activation process of the private mode explained here below;
- the display 8 has stored a factory user code, for example 0000, or a user code changed during the process of activating/deactivating the private mode explained here below;
   **+ If the smartphone 5 does not have a univocal code in its own local memory:**
      The smartphone 5 sends a signal to the display 8 of the type <<user code correctness check = *0000*>>;
      **+ If the user code received by the display 8 corresponds to the user code saved in the local memory of the display 8:**
         The display 8 enables the interaction between the smartphone 5 (the software) and the display 8;
         The display 8 sends a signal to the smartphone 5 of the type <<user code correctness reply = TRUE>>;
         The software allows the user to customize the display 8;
            **+ If the user activates the private mode via the software:**
               The software generates a random user code (*user code generated*) and couples it with the MAC address code (or at least a part thereof) of the display 8, thus generating the univocal code;
               The software stores the univocal code in the local memory of the smartphone 5;
               The smartphone 5 sends a signal to the display 8 of the type <<user code change = *user code generated*>>;
               The display 8 changes the user code in its own local memory;
               The smartphone acquires the administrator privileges (via the software);
      **+ If the user code received by the display 8 does not correspond to the user code saved in the local memory of the display 8:**
         The display 8 does not enable the interaction between the smartphone 5 (the software) and the display 8;
         The display 8 sends a signal to the smartphone 5 of the type <<user code correctness reply = FALSE>>;
         The message displayed to the user in the software is "*The user is not enabled*";
         The software does not allow the user to customize the display 8;
   **+ If the smartphone 5 has a univocal code in its own local memory (*user code stored*):**
      **+ If the univocal code contains the MAC address (or part thereof) of the display 8 connected to the smartphone 5:**
         Lo smartphone 5 sends a signal to the display 8 of the type <<user code correctness check = *user code stored*>>;
         **+ If the user code received by the display 8 corresponds to the user code saved in the local memory of the display 8:**
            The display 8 enables the interaction between the smartphone 5 (the software) and the display 8;
            The display 8 sends a signal to the smartphone 5 of the type <<user code correctness reply = TRUE>>;
            The software allows the user to customize the display 8;
               **+ If the user deactivates the private mode via the software:**
                  The software deletes the univocal code of the smartphone 5 from the local memory. Alternatively, the software stores the user code 0000 (factory user code) in the local memory of the smartphone 5 or couples it with the MAC address code (or at least with a part thereof) of the display 8, thus generating the univocal code;
                  The smartphone 5 sends a signal to the display 8 of the type <<user code change = 0000>>;
                  The display 8 changes the user code in its own local memory to 0000;
                  The smartphone 5 loses the administrator privileges (via the software) and a second smartphone 5 or 5' can connect and in turn become the (sole) administrator;
         **+ If the user code received by the display 8 does not correspond to the user code saved in the local memory of the display 8:**
            The display 8 does not enable the interaction between the smartphone 5 (the software) and the display 8;
            The display 8 sends a signal to the smartphone 5 of the type <<user code correctness reply = FALSE>>;
            The message displayed to the user in the software is "*The user is not enabled*";
            The software does not allow the user to customize the display 8;
      **+ If the univocal code does not contain the MAC address (or part thereof) of the display 8 connected to the smartphone 5:**
         The display 8 does not enable the interaction between the smartphone 5 (the software) and the display 8;
         The message displayed to the user in the software is "*The user is not enabled*";
         The software does not allow the user to customize the display 8;
- it is possible to reset the user code stored on the display 8 to the factory setting (for example 0000) with a RESET procedure on the device, for example with a specific combination of buttons or instructions;
- after the reset, a second smartphone 5 or 5' can connect and in turn become the (sole) administrator;
- the user code can be random or generated by an algorithm (for example, it takes the 1st, 2nd, 3rd, 6th and 7th hexadecimal number of the MAC address of the Bluetooth interface of the display);
- advantageously, if the display 8 does not enable the interaction between the smartphone 5 (the software) and the display 8, the software or the display 8 force the disconnection between the smartphone 5 and the display 8, so that the display 8 can be visible to other smartphones 5'.

## Claims

1. A control method to remotely and wirelessly control at least one programmable luminous display (8) of a shoe (1), comprising:
a) providing the display (8) with a wireless connection interface (21) supporting one or more connections to corresponding controllers (5, 5'), simultaneously or at different times;
b) providing the display (8) with a memory (20);
c) providing a first controller (5), named *master controller* (5), with a wireless connection interface;
c') assigning a univocal identification code to the master controller (5);
d) connecting the master controller (5) to the display (8) by using the wireless connection, wherein the identification code of the master controller (5) is stored in the memory (20) of the display (8);
e) assigning to the master controller (5) privileges of administering the display (8),
f) making the control operable by additional controllers, named slave *controllers* (5'), on the display (8) subject to approval or limitations by the master controller (5),
**characterized by**
g) changing the operating mode of the display (8) from public to private mode, or vice versa, by entering a user code on the master controller (5), in which
- in private mode, only the master controller (5) is authorized to change the programming of the display (8);
- in public mode, the slave controllers (5') are also authorized to change the programming of the display (8).

2. Method according to claim 1, wherein said univocal identification code is obtained in one of the following modes:
n1) setting the code manually by the user on the master controller (5), or
n2) automatically generating the code by the master controller (5) through a software, algorithm or in random mode, or
n3) using either the MAC address of the connection interface of the master controller (5) or the MAC address of the connection interface (21) of the display (8), or even only a part of the MAC address, or
n4) combining two or more of the codes obtained in n1-n3, or portions thereof.

3. Method according to claim 2, wherein said univocal identification code comprises a portion of the code set by the user of the master controller (5), named user code, and the MAC address of the connection interface (21) of the display (8), or a portion thereof.

4. Method according to claim 1, wherein the slave controllers (5') authorized in public mode are priorly and selectively authorized by the master controller (5).

5. Method according to any one of preceding claims 1-4, comprising:
h) storing one or more content, each comprising letters and/or numbers and/or symbols and/or drawings, in a library stored in at least one of the master controller memory (5), the memory (20) of the display (8) and/or a memory of the slave controller (5'), after first obtaining the approval from the master controller (5); and
i) inhibiting the possibility for the display (8) to show content other than those stored during step h).

6. Method according to any one of preceding claims 1-5, comprising:
h') storing one or more content, each comprising letters and/or numbers and/or symbols and/or drawings, in a library stored in at least one of the master controller memory (5), the memory (20) of the display (8), a memory of the slave controller (5'), after first obtaining the approval from the master controller (5); and
i') enabling or disabling, preferably by inserting a lock/unlock code or speech or fingerprint recognition, an editing mode to edit the content stored in the library during step h').

7. Method according to any one of the preceding claims, in which:
l) at least one between the master controller (5) and a slave controller (5') shares its own Internet connection with the display (8), and
m) the display (8) shows, automatically or by manual control, Internet content preferably after they have been authorized by the master controller (5).

8. Method according to any one of the preceding claims, wherein the master controller (5) manages with administrator privileges more than one display (8), one by one or at the same time, for example the displays (8) of several shoes (1), and each slave controller (5') controls one or more displays (8), selectively based on the authorizations set on the master controller (5).

9. Method according to any one of the preceding claims, in which the master controller (5) is a mobile device selected among a smartphone, a tablet, a smartwatch, a notebook, a voice assistant, and the control of a display (8) comprises one or more of: controlling the content shown on the display (8), controlling the displaying effects of the content, for example the duration, the movement of the content on the display (8) and the brightness of the display (8), controlling a library of authorized content, controlling the download of content via Internet connections shared with the master controller (5) or with a slave controller (5'), controlling a battery (7) powering the display (8), controlling the connections with one or more slave controllers (5'), where the term controlling is to be understood as the possibility of activating/deactivating or adjusting the display (8), or setting filters, for example for *parental control.*

10. Method according to any one of the preceding claims, comprising:
n) exercising administrator privileges directly via wireless or wired connection between the master controller (5), the slave controllers (5') and the displays (8), or indirectly via a processor (CC) of the displays (8), and/or
o) exercising administrator privileges via a website with which the master controller (5), slave controllers (5') and displays (8) can be connected, i.e. interfaced, or on which they are registered.

11. Method according to any one of the preceding claims, comprising:
p) remotely setting an emergency/warning mode of the displays (8), which corresponds to the displays on and fully lit in a continuous or intermittent manner, to allow the wearer to be more simply identified.

12. A method according to any one of the preceding claims 1-11, further comprising a method of controlling the at least one programmable luminous display (8) of the shoe, wherein the display is powered by a battery (7), the method comprising:
q) detecting the state of charge of the battery (7) and automatically selecting one of the following feedback modes, based on the detected state of charge:
r1) transmitting to the display (8), by a controller of the controllers (5, 5'), the content to be displayed aggregated in a single data packet, by using the connection interface (21) only for the time needed to transmit the single data packet;
r2) transmitting to the display (8), by a controller of the controllers (5, 5'), the content to be displayed divided into a plurality of data packets, by using the connection interface (21) for the time needed to transmit all data packets or intermittently;
r3) transmitting to the display (8), by a controller of the controllers (5, 5'), the content to be displayed, in real time as the content are created on the controller (5, 5') itself, while keeping the connection interface (21) always active.

13. Method according to claim 12, for the control of two displays (8) of different sizes, which are mounted on corresponding shoes (1), wherein step q) is implemented only on the battery (7) of the larger display (8) between the two displays (8).

14. Method according to any one of preceding claims 12-13, comprising:
t) providing the displays (8) with a sensor (23) for the light intensity in the environment in which the displays (8) are located; and
u) automatically feedback adjusting the brightness of the displays (8) based on the ambient light intensity detected by the corresponding sensors (23), by switching off the displays (8) in the event that the detected ambient light intensity is greater than a threshold value.

15. Method according to any one of preceding claims 12-14, comprising:
v) automatically feedback modifying, by means of a controller (5, 5') or processor (CC) of the displays (8), the content display light pattern, based on the state of charge detected in step q), by selecting a display light pattern that causes the battery (7) to be used less each time the state of charge of the battery (7) drops below a corresponding threshold level.

16. Method according to any one of preceding claims 12-15, comprising:
x) turning off the display if the state of charge of the battery (7) is equal to or less than a threshold value, and preserving the remaining battery charge (7) for the implementation of the emergency/warning step p) of claim 1.

17. Method according to any one of preceding claims 1-15, comprising:
z) in a pair of shoes (1', 1") each having a display (8', 8"), in which the displays (8) are arranged 180° apart from each other, the controller (5, 5') processes the content before transmitting them to the displays (8', 8"), or a processor (CC) of each display (8', 8") runs the processing, thereby obtaining also the specular and/or inverted version of the content, in order to obtain on both displays (8', 8") the same orientation of the content.

## Patentansprüche

1. Steuerungsverfahren zur Fernsteuerung und drahtlosen Steuerung von mindestens einer programmierbaren leuchtenden Anzeige (8) eines Schuhs (1), umfassend:
a) Ausstatten der Anzeige (8) mit einer drahtlosen Verbindungsschnittstelle (21), die eine oder mehrere Verbindungen zu entsprechenden Controllern (5, 5') gleichzeitig oder zu verschiedenen Zeiten unterstützt;
b) Ausstatten der Anzeige (8) mit einem Speicher (20);
c) Ausstatten eines ersten Controllers (5), genannt Master-Controller (5), mit einer drahtlosen Verbindungsschnittstelle;
c') Zuweisen eines eindeutigen Identifikationscodes zum Master-Controller (5);
d) Verbinden des Master-Controllers (5) mit der Anzeige (8) durch Benutzung der drahtlosen Verbindung, wobei der Identifikationscode des Master-Controllers (5) im Speicher (20) der Anzeige (8) gespeichert wird;
e) Zuweisen von Verwaltungsrechten für die Anzeige (8) zum Master-Controller (5);
f) die Steuerung, die durch weitere, als Slave-Controller (5') bezeichnete Controller auf dem Display (8) bedienbar ist, einer Zustimmung oder Begrenzung durch den Master-Controller (5) unterliegt,
**gekennzeichnet durch**
g) Ändern des Betriebsmodus der Anzeige (8) von öffentlich auf privat oder umgekehrt durch Eingabe eines Benutzercodes auf dem Master-Controller (5), wobei
- im Privatmodus nur der Master-Controller (5) autorisiert ist, die Programmierung der Anzeige (8) zu ändern;
- im öffentlichen Modus auch die Slave-Controller (5') autorisiert sind, die Programmierung der Anzeige (8) zu ändern.

2. Verfahren nach Anspruch 1, wobei der eindeutige Identifikationscode in einer der folgenden Modi erhalten wird:
n1) manuelles Setzen des Codes durch den Benutzer auf dem Master-Controller (5), oder
n2) automatisches Generieren des Codes durch den Master-Controller (5) über eine Software, einen Algorithmus oder im Zufallsmodus, oder
n3) Verwendung entweder der MAC-Adresse der Verbindungsschnittstelle des Master-Controllers (5) oder der MAC-Adresse der Verbindungsschnittstelle (21) der Anzeige (8), oder sogar nur eines Teils der MAC-Adresse, oder
n4) Kombinieren von zwei oder mehr der in n1-n3 erhaltenen Codes oder Teilen davon.

3. Verfahren nach Anspruch 2, wobei der eindeutige Identifikationscode einen Teil des vom Benutzer des Master-Controllers (5) gesetzten Codes, genannt Benutzercode, und die MAC-Adresse der Verbindungsschnittstelle (21) der Anzeige (8) oder einen Teil davon umfasst.

4. Verfahren nach Anspruch 1, wobei die im öffentlichen Modus autorisierten Slave-Controller (5') im Voraus und selektiv vom Master-Controller (5) autorisiert werden.

5. Verfahren nach einem der vorhergehenden Ansprüche 1-4, umfassend:
h) Speichern von einem oder mehreren Inhalten, die jeweils Buchstaben und/oder Zahlen und/oder Symbole und/oder Zeichnungen umfassen, in einer Bibliothek, die in mindestens einem von dem Speicher des Master-Controllers (5), dem Speicher (20) der Anzeige (8) und/oder einem Speicher des Slave-Controllers (5') gespeichert ist, nachdem zuvor die Zustimmung des Master-Controllers (5) erhalten wurde; und
i) Unterbinden der Möglichkeit für die Anzeige (8), Inhalte anzuzeigen, die während Schritt h) nicht gespeichert wurden.

6. Verfahren nach einem der vorhergehenden Ansprüche 1-5, umfassend:
h') Speichern von einem oder mehreren Inhalten, die jeweils Buchstaben und/oder Zahlen und/oder Symbole und/oder Zeichnungen umfassen, in einer Bibliothek, die in mindestens einem von dem Speicher des Master-Controllers (5), dem Speicher (20) der Anzeige (8) oder einem Speicher des Slave-Controllers (5') gespeichert ist, nachdem zuvor die Zustimmung des Master-Controllers (5) erhalten wurde; und
i') Freigeben oder Sperren, vorzugsweise durch Eingabe eines Sperr-/Entsperrcodes oder durch Sprach- oder Fingerabdruckerkennung, eines Editiermodus zum Editieren der in Schritt h) gespeicherten Inhalte.

7. Verfahren nach einem der vorhergehenden Ansprüche, bei dem:
l) mindestens einer zwischen dem Master-Controller (5) und einem Slave-Controller (5') seine eigene Internetverbindung mit der Anzeige (8) teilt, und
m) die Anzeige (8) Internetinhalte automatisch oder durch manuelle Steuerung zeigt, vorzugsweise nach Autorisierung durch den Master-Controller (5).

8. Verfahren nach einem der vorhergehenden Ansprüche, bei dem der Master-Controller (5) mit Administratorrechten mehr als eine Anzeige (8), eine nach der anderen oder gleichzeitig, verwaltet, beispielsweise die Anzeigen (8) mehrerer Schuhe (1), und jeder Slave-Controller (5') eine oder mehrere Anzeigen (8) selektiv basierend auf den vom Master-Controller (5) festgesetzten Autorisierungen steuert.

9. Verfahren nach einem der vorhergehenden Ansprüche, bei dem der Master-Controller (5) ein mobiles Gerät ist, ausgewählt aus einem Smartphone, einem Tablet, einer Smartwatch, einem Notebook, einem Sprachassistenten, und die Steuerung einer Anzeige (8) eine oder mehrere der folgenden umfasst: Steuerung des auf der Anzeige (8) gezeigten Inhalts, Steuerung der Anzeigeeffekte des Inhalts, beispielsweise die Dauer, die Bewegung des Inhalts auf der Anzeige (8) und die Helligkeit der Anzeige (8), Steuerung einer Bibliothek autorisierter Inhalte, Steuerung des Herunterladens von Inhalten über Internetverbindungen, die mit dem Master-Controller (5) oder einem Slave-Controller (5') geteilt werden, Steuerung einer Batterie (7), die die Anzeige (8) mit Strom versorgt, Steuerung der Verbindungen mit einem oder mehreren Slave-Controllern (5'), wobei der Begriff "Steuerung" als die Möglichkeit, die Anzeige (8) zu aktivieren/deaktivieren oder einzustellen oder Filter beispielsweise für die Kindersicherung zu setzen, verstanden wird.

10. Verfahren nach einem der vorhergehenden Ansprüche, umfassend:
n) - Ausüben von Administratorrechten direkt über drahtlose oder kabelgebundene Verbindungen zwischen dem Master-Controller (5), den Slave-Controllern (5') und den Anzeigen (8), oder indirekt über einen Prozessor (CC) der Anzeigen (8), und/oder
o) - Ausüben von Administratorrechten über eine Website, mit der der Master-Controller (5), die Slave-Controller (5') und die Anzeigen (8) verbunden, d. h. schnittstellenverbunden werden können oder auf der sie registriert sind.

11. Verfahren nach einem der vorhergehenden Ansprüche, umfassend:
p) Ferneinstellen eines Notfall-/Warnmodus der Anzeigen (8), der dem Anzeigenzustand entspricht, bei dem sie durchgehend oder intermittierend eingeschaltet und vollständig beleuchtet sind, um dem Träger eine einfachere Identifizierung zu ermöglichen.

12. Verfahren nach einem der vorhergehenden Ansprüche 1 bis 11, das ferner ein Verfahren zur Steuerung der mindestens einen programmierbaren leuchtenden Anzeige (8) des Schuhs umfasst, wobei die Anzeige durch eine Batterie (7) mit Strom versorgt wird, wobei das Verfahren umfasst:
q) Erfassen des Ladezustands der Batterie (7) und automatisches Auswählen eines der folgenden Rückkopplungsmodi, basierend auf dem erfassten Ladezustand:
r1) Übertragen des anzuzeigenden und in einem einzigen Datenpaket zusammengefassten Inhalts an die Anzeige (8) durch einen Controller der Controller (5, 5'), wobei die Verbindungsschnittstelle (21 ) nur für die Zeit verwendet wird, die für die Übertragung des einzigen Datenpakets erforderlich ist;
r2) Übertragen des anzuzeigenden und in mehrere Datenpakete unterteilten Inhalts an die Anzeige (8) durch einen Controller der Controller (5, 5'), wobei die Verbindungsschnittstelle (21) nur für die Zeit verwendet wird, die für die Übertragung aller Datenpakete oder intermittierend erforderlich ist;
r3) Übertragen des anzuzeigenden Inhalts an die Anzeige (8) durch einen Controller der Controller (5, 5'), und zwar in Echtzeit bei Erstellung der Inhalte auf dem Controller (5, 5') selbst, wobei die Verbindungsschnittstelle (21) immer aktiv bleibt.

13. Verfahren nach Anspruch 12, zur Steuerung von zwei Anzeigen (8) unterschiedlicher Größe, die an entsprechenden Schuhen (1) angebracht sind, wobei der Schritt q) nur auf der Batterie (7) der größeren Anzeige (8) zwischen den beiden Anzeigen (8) implementiert ist.

14. Verfahren nach einem der vorhergehenden Ansprüche 12-13, umfassend:
t) Ausstatten der Anzeigen (8) mit einem Sensor (23) für die Lichtintensität in der Umgebung, in der sich die Anzeigen (8) befinden; und
u) automatisches Rückkopplungseinstellen der Helligkeit der Anzeigen (8) basierend auf der von den entsprechenden Sensoren (23) erfassten Umgebungslichtintensität, durch Abschalten der Anzeigen (8), wenn die erkannte Umgebungslichtintensität größer als ein Schwellenwert ist.

15. Verfahren nach einem der vorhergehenden Ansprüche 12-14, umfassend:
v) automatisches rückgekoppeltes Ändern des Inhaltsanzeigelichtmusters mittels eines Controllers (5, 5') oder Prozessors (CC) der Anzeigen (8) auf der Grundlage des in Schritt q) erfassten Ladezustands durch Auswählen eines Anzeigelichtmusters, das eine geringere Benutzung der Batterie (7) jedes Mal bewirkt, wenn der Ladezustand der Batterie (7) unter ein entsprechendes Schwellenniveau fällt.

16. Verfahren nach einem der vorhergehenden Ansprüche 12-15, umfassend:
x) Ausschalten der Anzeige, wenn der Ladezustand der Batterie (7) gleich oder kleiner als ein Schwellenwert ist, und Aufbewahren der verbleibenden Batterieladung (7) für die Implementierung des Notfall-/Warnschritts p) von Anspruch 1.

17. Verfahren nach einem der vorhergehenden Ansprüche 1-15, in dem:
z) in einem Paar Schuhe (1', 1") mit je einem Display (8', 8"), wobei die Displays (8) um 180° voneinander angeordnet sind, der Controller (5, 5') die Inhalte verarbeitet, bevor er sie an die Displays (8', 8") überträgt, oder ein Prozessor (CC) jedes Displays (8', 8") die Verarbeitung durchführt und dabei auch die spiegelbildliche und/oder umgekehrte Version der Inhalte erhält, um auf beiden Displays (8', 8") die gleiche Orientierung der Inhalte zu erhalten.

## Revendications

1. Une méthode pour commander, à distance et sans fil, au moins un écran lumineux programmable (8) d'une chaussure (1), comprenant:
a) fournir l'écran (8) avec une interface de connexion sans fil (21) supportant une ou plusieurs connexions, simultanément ou à des moments différents, à des contrôleurs correspondants (5, 5');
b) fournir l'écran (8) avec une mémoire (20);
c) fournir un premier contrôleur (5), nommé *contrôleur maître* (5) avec une interface de connexion sans fil;
c') attribuer un code d'identification univoque au contrôleur maître (5);
d) relier le contrôleur maître (5) à l'écran (8) en utilisant la connexion sans fil, dans laquelle le code d'identification du contrôleur maître (5) est mémorisé dans la mémoire (20) de l'écran (8);
e) attribuer des privilèges d'administration de l'écran (8) au contrôleur maître (5),
f) rendre le contrôle opérable sur l'écran (8) par des contrôleurs supplémentaires, nommés *contrôleurs esclaves* (5'), sous réserve de l'autorisation ou des limitations du contrôleur maître (5),
**caractérisée en ce qu'**elle
g) modifie le mode de fonctionnement de l'écran (8) du mode public au mode privé, ou vice versa, en saisissant un code utilisateur sur le contrôleur maître (5), où
- en mode privé, seul le contrôleur maître (5) est autorisé à modifier la programmation de l'écran (8);
- en mode public, les contrôleurs esclaves (5') sont également autorisés à modifier la programmation de l'écran (8).

2. Méthode selon la revendication 1, dans laquelle ledit code d'identification univoque est obtenu selon l'une des modes suivantes:
n1) en réglant, par l'utilisateur, le code manuellement sur le contrôleur maître (5), ou
n2) en générant le code automatiquement, par le contrôleur maître (5) au moyen d'un logiciel, d'un algorithme ou en mode aléatoire, ou
n3) en utilisant soit l'adresse MAC de l'interface de connexion du contrôleur maître (5) soit l'adresse MAC de l'interface de connexion (21) de l'écran (8), ou même seulement une partie de l'adresse MAC, ou
n4) en associant deux ou plusieurs des codes obtenus dans n1-n3, ou des portions des mêmes.

3. Méthode selon la revendication 2, dans laquelle ledit code d'identification univoque comprend une portion du code définie par l'utilisateur du contrôleur maître (5), nommé code utilisateur, et l'adresse MAC de l'interface de connexion (21) de l'écran (8), ou une partie de la même.

4. Méthode selon la revendication 1, dans laquelle les contrôleurs esclaves (5') autorisés en mode public sont préalablement et sélectivement autorisés par le contrôleur maître (5).

5. Méthode selon l'une quelconque des revendications précédentes 1-4, comprenant:
h) mémoriser un ou plusieurs contenus, chacun comprenant des lettres et/ou des chiffres et/ou des symboles et/ou des dessins, dans une bibliothèque logicielle mémorisée dans au moins une parmi la mémoire du contrôleur maître (5), la mémoire (20) de l'écran (8) et/ou une mémoire du contrôleur esclave (5'), après avoir d'abord obtenu l'approbation du contrôleur maître (5); et
i) empêcher l'écran (8) de pouvoir afficher des contenus autres que ceux mémorisés lors de l'étape h).

6. Méthode selon l'une quelconque des revendications précédentes 1-5, comprenant:
h') mémoriser un ou plusieurs contenus, chacun comprenant des lettres et/ou des chiffres et/ou des symboles et/ou des dessins, dans une bibliothèque logicielle mémorisée dans au moins une parmi la mémoire du contrôleur maître (5), la mémoire (20) de l'écran (8), une mémoire du contrôleur esclave (5'), après avoir d'abord obtenu l'approbation du contrôleur maître (5); et
i') activer ou désactiver, de préférence en insérant un code de verrouillage/de déverrouillage ou par reconnaissance vocale ou d'empreintes digitales, un mode de modification du contenu mémorisé dans la bibliothèque logicielle lors de l'étape h').

7. Méthode selon l'une quelconque des revendications précédentes, dans laquelle:
l) au moins un parmi le contrôleur maître (5) et un contrôleur esclave (5') partage sa propre connexion Internet avec l'écran (8), et
m) l'écran (8) affiche, automatiquement ou par commande manuelle, des contenus Internet, de préférence après avoir été autorisé par le contrôleur maître (5).

8. Méthode selon l'une quelconque des revendications précédentes, dans laquelle le contrôleur maître (5) gère plus d'un écran (8), soit un par un, soit simultanément, avec des privilèges d'administrateur, par exemple les écrans (8) de plusieurs chaussures (1), et chaque contrôleur esclave (5') commande un ou plusieurs écrans (8) de manière sélective en fonction des autorisations définies sur le contrôleur maître (5).

9. Méthode selon l'une ou plusieurs des revendications précédentes, dans laquelle le contrôleur maître (5) est un dispositif mobile sélectionné parmi un smartphone, une tablette, une montre intelligente, un ordinateur portable, un assistant vocal, et le contrôle d'un écran (8) comprend une ou plusieurs des points suivantes: régler le contenu affiché sur l'écran (8), contrôler les effets du contenu sur l'écran, par exemple la durée, le mouvement du contenu sur l'écran (8) et la luminosité de l'écran (8), contrôler une bibliothèque logicielle de contenus autorisés, contrôler le téléchargement de contenus via des connexions Internet partagées avec le contrôleur maître (5) ou avec un contrôleur esclave (5'), contrôler une batterie (7) alimentant l'écran (8), contrôler les connexions avec un ou plusieurs contrôleurs esclaves (5'), dans laquelle l'expression contrôler devant être compris comme la possibilité d'activer/de désactiver ou de régler l'écran (8), ou de définir des filtres, par exemple pour le *contrôle parental.*

10. Méthode selon l'une quelconque des revendications précédentes, comprenant:
n) exercer les privilèges d'administrateur directement via une connexion sans fil ou câblée entre le contrôleur maître (5), les contrôleurs esclaves (5') et les écrans (8), ou directement via un processeur (CC) des écrans (8), et/ou
o) exercer les privilèges d'administrateur via un site web auquel le contrôleur maître (5), les contrôleurs esclaves (5') et les écrans (8) peuvent être reliés, c.à.d. interfacés, ou sur lequel ils sont enregistrés.

11. Méthode selon l'une quelconque des revendications précédentes, comprenant:
p) régler à distance un mode d'urgence/d'avertissement des écrans (8) correspondant aux écrans allumés et pleinement éclairés de manière continue ou intermittente, pour permettre d'identifier plus simplement le porteur.

12. Une méthode selon l'une quelconque des revendications précédentes 1-11, comprenant en outre une méthode pour commander l'au moins un écran lumineux programmable (8) de la chaussure, dans lequel l'écran est alimenté par une batterie (7), la méthode comprenant:
q) détecter l'état de charge de la batterie (7) et sélectionner automatiquement un des modes de rétroaction suivants, en fonction de l'état de charge détecté:
r1) transmettre à l'écran (8), via un contrôleur des contrôleurs (5, 5'), le contenu à afficher agrégé dans un seul paquet de données, en utilisant l'interface de connexion (21) uniquement pendant le temps nécessaire pour transmettre le seul paquet de données;
r2) transmettre à l'écran (8), via un contrôleur des contrôleurs (5, 5'), le contenu à afficher divisé en une pluralité de paquets de données, en utilisant l'interface de connexion (21) pendant le temps nécessaire pour transmettre tous les paquets de données ou par intermittence;
r3) transmettre à l'écran (8), via un contrôleur des contrôleurs (5, 5'), le contenu à afficher en temps réel puisque le contenu est créé sur le contrôleur (5, 5') lui-même, tout en continuant à maintenir l'interface de connexion (21) active.

13. Méthode selon la revendication 12, pour commander deux écrans (8) de dimensions différentes et montés sur des chaussures (1) correspondantes, dans laquelle l'étape q) est effectuée uniquement sur la batterie (7) du plus grand écran (8) parmi les deux écrans (8).

14. Méthode selon l'une quelconque des revendications précédentes 12-13, comprenant:
t) fournir les écrans (8) avec un capteur (23) de l'intensité de la lumière dans l'environnement dans lequel les écrans (8) sont situés; et
u) régler en rétroaction automatiquement la luminosité des écrans (8) en fonction de l'intensité de la lumière ambiante détectée par les capteurs (23) correspondants, en éteignant les écrans (8) lorsque l'intensité de la lumière ambiante détectée est supérieure à une valeur seuil.

15. Méthode selon l'une quelconque des revendications précédentes 12-14, comprenant:
v) modifier en rétroaction automatiquement, au moyen d'un contrôleur (5, 5') ou d'un processeur (CC) des écrans (8), le schéma lumineux d'affichage du contenu en fonction de l'état de charge détecté dans l'étape q), en sélectionnant un schéma lumineux d'affichage qui entraîne une moindre consommation de la batterie (7) lorsque l'état de charge de la batterie (7) descend en dessous d'un niveau seuil correspondant.

16. Méthode selon l'une quelconque des revendications précédentes 12-15, comprenant:
x) éteindre l'écran lorsque l'état de la batterie (7) est égal ou inférieur à une valeur seuil et réserver la charge restante de la batterie (7) pour la mise en oeuvre de l'étape p) d'urgence/d'avertissement de la revendication 1.

17. Méthode selon l'une quelconque des revendications précédentes 1-15, comprenant:
z) dans une paire de chaussures (1', 1') ayant chacune un écran (8', 8"), dans lesquelles les écrans (8) sont disposés à 180° l'un par rapport à l'autre, le contrôleur (5, 5') traite le contenu avant de le transmettre aux écrans (8', 8"), ou un processeur (CC) de chaque écran (8', 8") exécute le traitement, obtenant donc également la version spéculaire et/ou inversée du contenu, de sorte à obtenir la même orientation du contenu sur les deux écrans (8', 8").
